# EUROPEAN PATENT APPLICATION

(11) **EP 3 957 693 A1**
(43) Date of publication of application: **23.02.2022**
(21) Application number: 20191498.3
(22) Date of filing: 18.08.2020
(51) Int. Cl.: C09D 153/00, C08F 293/00, C08F 8/14, C09D 5/00, C09D 133/06, C09D 175/04, C09D 7/45

(54) **BLOCK COPOLYMER CONTAINING HIGH SOLIDS BASECOATS FOR PREVENTION OF TACKINESS DEFECTS**

(71) Applicant: BASF Coatings GmbH, 48165 Münster (DE)
(72) Inventor: Wamsley, Daren Michael, Southfield, MI 48033 (US); Samanta, Shampa R., Southfield, MI 48033 (US); Li, Wenle, Southfield, MI 48033 (US); Hartlieb, Karel, Southfield, MI 48033 (US); White, Donald Anthony, Southfield, MI 48033 (US)
(74) Representative: Steffan & Kiehne Patentanwälte PartG mbB

(57) **Abstract**

The present invention relates to a coating material composition comprising at least constituents (A), (B), (C), (D), (E) and (F), each being different from one another, namely a film-forming polymer (A), a melamine resin (B), an acidic crosslinking catalyst (C), water and/or at least one organic solvent (D), a pigment (E), and at least one OH-functional (meth)acrylic block copolymer, wherein the copolymer contains side chains at least within a part of its structural units forming at least one of the blocks, each side chain containing at least one aromatic moiety and each side chain being attached via an ester and/or ether bond, and wherein the coating material composition has a total solids content of at least 35 wt.-%, based on the total weight of the coating material composition, a method of forming a coating film onto a surface of a substrate by making use of said coating material composition, a method of preparing a multilayer coating system onto an optionally pre-coated substrate comprising at least steps (2), (4) and (5), and optionally step(s) (1) and/or (3), a coated substrate obtainable by the inventive methods and a use of the aforementioned coating material composition as a basecoat composition.

## Description

The present invention relates to a coating material composition comprising at least constituents (A), (B), (C), (D), (E) and (F), each being different from one another, namely a film-forming polymer (A), a melamine resin (B), an acidic crosslinking catalyst (C), water and/or at least one organic solvent (D), a pigment (E), and at least one OH-functional (meth)acrylic block copolymer, wherein the copolymer contains side chains at least within a part of its structural units forming at least one of the blocks, each side chain containing at least one aromatic moiety and each side chain being attached via an ester and/or ether bond, and wherein the coating material composition has a total solids content of at least 35 wt.-%, based on the total weight of the coating material composition, a method of forming a coating film onto a surface of a substrate by making use of said coating material composition, a method of preparing a multilayer coating system onto an optionally pre-coated substrate comprising at least steps (2), (4) and (5), and optionally step(s) (1) and/or (3), a coated substrate obtainable by the inventive methods and a use of the aforementioned coating material composition as a basecoat composition.

### Background of the invention

In typical automotive coating processes, usually at least four layers are applied to the metal surface of a suitable substrate: an electrodeposition coat (e-coat), at least one of a primer and a sealer, at least one basecoat, and a topcoat, in particular a clearcoat. At least the e-coat layer is generally applied to the substrate surface and then cured before any of the further coatings are applied on top. Subsequent to applying a primer and/or sealer composition, at least one basecoat formulation, which is usually pigmented and contains at least one solvent, is applied and the solvent is flashed off. Then a topcoat such as a clearcoat is usually applied, nowadays typically in a wet-on-wet-application. Afterwards the coated substrate is passed through an oven at temperatures to cure at least the basecoat(s) and the topcoat such as the clearcoat simultaneously in a 2C1B process. In some cases, also the primer coat - if applied - is cured at this stage together with the basecoat(s) and topcoat, in particular clearcoat, e.g. in a 3C1B or even in a 4C1B process.

In order to reduce the amount of volatile organic compounds (VOC) as much as possible, e.g. for ecological reasons, it is in general desirable to use coating compositions with a rather high solids content such as of at least 35 wt.-%, based on the total weight of the coating composition, in such processes. In order to be able to efficiently formulate high solids basecoat compositions, in particular high solids solventborne basecoat compositions, it is often necessary to incorporate a monomeric melamine based crosslinking agent in order to achieve the desired high solid content. Such monomeric melamine based crosslinking agents in turn require the use of a strong acid catalyst, such as an organic sulfonic acid, to promote curing under typical curing temperatures in an automotive assembly plant. Because of this acid-catalyzed curing mechanism, the presence of basic materials in the basecoat composition can cause an undesired undercure (lack of cure) of the topcoat such as of the clearcoat when applied on top of the basecoat, which can manifest as an unwanted tackiness defect.

Such basic materials can, for instance, unwantedly migrate into the basecoat from coatings underneath the basecoat during and after having performed the aforementioned automotive coating processes, in particular when these processes include wet-on-wet application steps, and then lead to such undesired tackiness defects. For example, often conventional PVC sealers are applied onto substrate surfaces after an electrodeposition coat has been applied and cured. Such PVC sealers usually contain a desiccant such as calcium oxide, which absorbs water and reacts to form calcium hydroxide. This formed basic material can then migrate into the layers applied on top of the sealer such as into the basecoat layer and can then interact with the catalyst causing the aforementioned undesired tackiness defect after application of the topcoat due to a lack of sufficient cure. Migration of these basic materials may be prevented or at least reduced in some cases by applying and directly baking a further coat over the PVC sealer such as a primer coat. However, in particular for economic reasons, in recent years the aforementioned automotive coating processes making use of wet-on-wet application steps and further making use of high solids coating compositions have been established. In such processes the at least one basecoat and the topcoat such as the clearcoat and often also the primer, are all applied wet-on-wet and then simultaneously cured, for example in a 2C1B, 3C1B or even in a 4C1B process. This, however, in turn again allows basic materials such as calcium hydroxide to migrate more freely from the sealer to the upper layers causing the aforementioned tackiness problems.

However, not only basic materials migrated from any other layers underneath the basecoat layer into the basecoat layer may contribute to the aforementioned undesired tackiness defects. Such defects may also be caused by basic materials already present in the basecoat composition upon its formulation. For example, for pigmented conventional high solids basecoat compositions often pigment dispersant resins are used, which contain amino functionalities to act as an anchoring group to the pigment particles for stabilization. The use of such conventional amino group containing dispersants in high solids basecoats is, however, undesired, as these may interfere with the aforementioned acid-catalyzed curing mechanism and thus may also lead to undesired tackiness defects.

Thus, there is a need to provide high solids basecoat compositions suitable to be applied in a method for providing a multilayer coating system on a substrate comprising at least one wet-on-wet application method step involving the basecoat composition, in particular suitable for use in a 2C1B, 3C1B or 4C1B process. At the same time these high solids basecoat compositions are ought to allow the relevant components contained therein to effectively undergo an acid-catalyzed crosslinking reaction in order to prevent or at least reduce as much as possible an undesired undercure of any coating applied on top of the basecoat in the aforementioned method, in particular of a clearcoat applied on top of the basecoat, such that unwanted tackiness defects can be completely or at least substantially avoided. It is in particular desired that this is even then achieved when the method for providing a multilayer coating system comprises a step of applying any desiccant containing sealer such as a PVC sealer to an optionally pre-coated substrate before the high solids basecoat composition is applied.

### Problem

It has been therefore an object underlying the present invention to provide a high solids basecoat composition, which is suitable to be applied in a method for providing a multilayer coating system on a substrate comprising at least one wet-on-wet application method step involving the basecoat composition, in particular which is suitable for use in a 2C1B, 3C1B or 4C1B process. At the same time the high solids basecoat composition is ought to allow the relevant components contained therein to effectively undergo an acid-catalyzed crosslinking reaction in order to prevent or at least reduce as much as possible an undesired undercure of any coating applied on top of the basecoat in the aforementioned method, in particular of a clearcoat applied on top of said basecoat, such that undesired tackiness defects can be completely or at least substantially avoided. This is to be even then achieved when the method for providing a multilayer coating system comprises a step of applying any desiccant containing sealer such as a PVC sealer to an optionally pre-coated substrate before the high solids basecoat composition is applied.

### Solution

This object has been solved by the subject-matter of the claims of the present application as well as by the preferred embodiments thereof disclosed in this specification, i.e. by the subject matter described herein.

A first subject-matter of the present invention is a coating material composition, which preferably is a solventborne coating material composition, comprising at least constituents (A), (B), (C), (D), (E) and (F), each being different from one another, namely
(A) at least one film-forming polymer having crosslinkable functional groups,
(B) at least one melamine resin as crosslinking agent having crosslinkable functional groups, which can be crosslinked with the crosslinkable functional groups of polymer (A),
(C) at least one acidic crosslinking catalyst, which is suitable to catalyze a crosslinking reaction between at least the functional groups of the melamine resin (B) and the functional groups of polymer (A),
(D) water and/or at least one organic solvent,
(E) at least one pigment, and
(F) at least one OH-functional (meth)acrylic block copolymer, wherein the copolymer contains side chains at least within a part of its structural units forming at least one of the blocks, each side chain containing at least one aromatic moiety and each side chain being attached via an ester and/or ether bond, preferably via an ester bond,
   wherein the coating material composition has a total solids content of at least 35 wt.-%, based on the total weight of the coating material composition.

A further subject-matter of the present invention is a method of forming a coating film onto a substrate, wherein said method comprises at least one method step of applying the inventive coating material composition at least partially onto at least one surface of an optionally pre-coated substrate to form a coating film on the surface of the substrate.

A further subject-matter of the present invention is a method of preparing a multilayer coating system onto an optionally pre-coated substrate comprising at least steps (2), (4) and (5), and optionally step(s) (1) and/or (3), namely
(1) optionally applying a primer composition to an optionally pre-coated substrate and forming an primer coating film on the optionally pre-coated substrate,
(2) applying a basecoat composition to an optionally pre-coated substrate or - in case step (1) is performed - to the primer coating film of the substrate obtained from step (1) and forming a basecoat coating film adjacent to the primer coating film,
(3) optionally applying a second basecoat composition different from the basecoat composition applied in step (2) to the basecoat coating film present on the substrate obtained after step (2) prior to curing said basecoat coating film and forming a second basecoat coating film adjacent to the basecoat coating film already present on the substrate,
(4) applying a topcoat composition to the basecoat coating film present on the substrate obtained after step (2) prior to curing said basecoat coating film and forming a topcoat coating film adjacent to the basecoat coating film or - in case step (3) is performed - to the second basecoat coating film present on the substrate obtained after step (3) prior to curing said second basecoat coating film and forming a topcoat coating film adjacent to the second basecoat coating film, and
(5) jointly curing at least the basecoat film and the topcoat film obtained after steps (2) and (4) and optionally also - if present - the primer coating film and/or the second basecoat film obtained after step(s) (1) and/or (3) to obtain a multilayer coating system,
wherein the inventive coating material composition is used as basecoat composition in step (2) when step (3) is not performed, or is used as basecoat composition in step (2) or as second basecoat composition in step (3) when step (3) is performed. When step (3) is performed, the inventive coating material composition preferably is used as basecoat composition in step (2).

A further subject-matter of the present invention is a coated substrate obtainable by each of the inventive methods.

A further subject-matter of the present invention is a use of the inventive coating material composition as a basecoat composition, preferably in one or both of inventive methods.

It has been surprisingly found that the inventive basecoat composition allows the relevant components contained therein to effectively undergo an acid-catalyzed crosslinking reaction in order to prevent or at least reduce as much as possible an undesired undercure of any coating applied on top of the basecoat in the aforementioned method, in particular of a clearcoat applied on top of said basecoat, such that undesired tackiness defects can be completely or at least substantially avoided. It has been in particular surprisingly found that this can even be achieved when a method for providing a multilayer coating system, which makes use of the inventive basecoat composition, comprises a step of applying any desiccant containing sealer such as a PVC sealer to an optionally pre-coated substrate before the inventive high solids basecoat composition is applied.

It has been further surprisingly found that the inventive basecoat composition is suitable to be applied in a method for providing a multilayer coating system on a substrate comprising at least one wet-on-wet application method step involving the basecoat composition, in particular is suitable for use in a 2C1B, 3C1B or 4C1B process.

It has been in particular found that the aforementioned surprising advantages can be achieved by incorporation of the inventively used copolymer (F) into the basecoat composition. The copolymer can serve as a non-basic dispersant resin to stabilize pigment particles and at the same time can eliminate any tackiness defects, in particular when the inventive basecoat composition is applied over a sealer such as a PVC sealer as part of a wet-on-wet application method, for example in a 2C1B, 3C1B or 4C1B process. It has been in particular found that the use of said copolymer surprisingly has advantages compared to conventional high solids basecoat formulation containing instead a pigment dispersant resin, which comprises amino groups since the use of such amino group containing dispersants in high solids basecoats has been found to interfere with the aforementioned acid-catalyzed curing mechanism and thus leads to undesired tackiness defects. These defects are not observed when incorporating the inventively used copolymer into the basecoat compositions and said copolymer has been further been found to stabilize pigment particles at least to the same extent as conventional amino group containing dispersants.

### Detailed description of the invention

The term "comprising" in the sense of the present invention, in connection for example with the inventive coating material composition and said compositions used in the inventive method, preferably has the meaning of "consisting of". In this case it is possible - in addition to all mandatory constituents present therein - for one or more of the further constituents identified hereinafter to be also optionally included therein. All constituents may in each case be present in their preferred embodiments as identified hereinafter.

The proportions and amounts in wt.-% (% by weight) of any of the constituents given hereinafter, which are present in the coating material composition add up to 100 wt.-%, based in each case on the total weight of the composition.

### Coating material composition

The inventive coating material composition (in the following also referred to simply as coating composition) has a total solids content of at least 35 wt.-%, based on the total weight of the coating material composition, and thus represents a high solids coating material composition. Preferably, the coating material composition has a total solids content of at least 37.5 wt.-%, preferably of at least 40.0 wt.-%, more preferably of at least 42.5 wt.-%, even more preferably of at least 45.0 wt.-%, in particular of at least 47.5 wt.-%, in each case based on the total weight of the coating material composition. The total solids content is determined according to the method described in the 'Methods' section hereinafter.

Preferably, the inventive coating material composition is an aqueous (waterborne) or organic solvent-based (solventborne, non-aqueous) basecoat composition, more preferably a solventborne basecoat composition. More preferably, the coating composition is used as a 1K-waterborne basecoat composition or as a 1K-solventborne, in particular as a 1K-solventborne, basecoat composition. The inventive coating composition can be used both as OEM coating composition and for refinish applications. The inventive coating composition is in particular not a primer, primer surfacer or sealer composition and is thus not to be used/applied as a primer, primer surfacer or sealer composition.

The term "basecoat" is known in the art and, for example, defined in Römpp Lexikon, paints and printing inks, Georg Thieme Verlag, 1998, 10th edition, page 57. A basecoat is therefore in particular used in automotive painting and general industrial paint coloring in order to give a coloring and/or an optical effect by using the basecoat as an intermediate coating composition. This is generally applied to a metal or plastic substrate, optionally pretreated with a primer and/or filler and/or sealer, sometimes in the case of plastic substrates also directly on the plastic substrate, and in the case of metal substrates on an electrodeposition coating layer coated onto the metal substrate or on the metal substrate already bearing a primer and/or filler and/or sealer and/or electrodeposition coating, or to already existing coatings in case of refinish applications, which can also serve as substrates. In order to protect a basecoat film in particular against environmental influences, at least one additional clearcoat film is applied to it.

The term "solventborne" or "non-aqueous" is understood preferably for the purposes of the present invention to mean that organic solvent(s), as solvent and/or as diluent, is/are present as the main constituent of all solvents and/or diluents present in the inventive coating material composition if it is solventborne - and also preferably in any pigment paste used for preparing said composition -, preferably in an amount of at least 35 wt.-%, based on the total weight of the coating composition. If the coating material composition is solventborne, constituent (D) preferably is at least one organic solvent and does not represent water. The coating composition preferably includes an organic solvent(s) fraction of at least 40 wt.-%, more preferably of at least 45 wt.-%, very preferably of at least 50 wt.-%, based in each case on the total weight of the coating composition. All conventional organic solvents known to those skilled in the art can be used as organic solvents. The term "organic solvent" is known to those skilled in the art, in particular from Council Directive 1999/13 / EC of 11 March 1999. Examples of such organic solvents would include heterocyclic, aliphatic, or aromatic hydrocarbons, mono- or polyhydric alcohols, especially methanol and/or ethanol, ethers, esters, ketones, and amides, such as, for example, N-methylpyrrolidone, N-ethylpyrrolidone, dimethylformamide, toluene, xylene, butanol, ethyl glycol and butyl glycol and also their acetates, butyl diglycol, diethylene glycol dimethyl ether, cyclohexanone, methyl ethyl ketone, methyl isobutyl ketone, acetone, isophorone, or mixtures thereof. The coating composition when solventborne preferably is free or essentially free of water.

The term "waterborne" or "aqueous" is understood preferably for the purposes of the present invention to mean that water is present as the main constituent of all solvents and/or diluents present in the inventive coating material composition if it is waterborne - and also preferably in any pigment paste used for preparing said composition -, preferably in an amount of at least 35 wt.-%, based on the total weight of the coating composition. If the coating material composition is waterborne, constituent (D) comprises water at least as main solvent. Organic solvent(s) may be additionally present, but in a lower amount than water. The coating composition when waterborne preferably includes a water fraction of at least 40 wt.-%, more preferably of at least 45 wt.-%, very preferably of at least 50 wt.-%, based in each case on the total weight of the coating composition. The a fraction of organic solvent(s) is preferably < 20 wt.-%, more preferably in a range of from 0 to < 20 wt.-%, very preferably in a range of from 0.5 to 20 wt.-% or to 17.5 wt.-% or to 15 wt.-% or to 10 wt.-%, based in each case on the total weight of the coating composition.

Most preferably, the inventive coating material composition is a solventborne coating material composition, which preferably does not comprise or substantially does not comprise any water. The term "substantially" in this context preferably means that no water is added on purpose when preparing the coating material composition.

Preferably, the coating material composition does not comprise any constituent(s) containing free primary and/or secondary amino groups or - in case at least one constituent containing free primary and/or secondary amino groups is present in the coating material composition - the amount of said constituent in wt.-%, based on its solids content within the coating material composition, is less than the amount of the at least one block copolymer (F) present in the coating material composition in wt.-%. Preferably, the amount of any constituent containing primary and/or secondary amino groups present in the coating material composition is at most 3 wt.-%, more preferably at most 2.5 wt.-%, even more preferably at most 2.0 wt.-%, yet more preferably at most 1.5 wt.-%, in particular at most 1.0 wt.-%, based in each case on the total solids content of the coating material composition.

### Constituent (A) - Film-forming polymer

The coating material composition comprises at least one film-forming polymer as constituent (A), which has crosslinkable functional groups, which can in turn be crosslinked at least with the crosslinkable functional groups of melamine resin (B), in particular when catalyzed by the at least one crosslinking catalyst (E).

The film-forming polymer (A) represents a binder. For the purposes of the present invention, the term "binder" is understood in accordance with DIN EN ISO 4618 (German version, date: March 2007) to be the non-volatile (solid) constituent of a coating composition, which is responsible for the film formation. The term includes crosslinkers and additives such as catalysts if these represent non-volatile constituents. Pigments and/or fillers (constituent (D)) are not subsumed under the term "binder" as these are not responsible for film formation. However, for example constituents (B) and (F) are to be subsumed under the term "binder". Preferably, the at least one polymer (A) is the main binder of the coating composition. As the main binder in the sense of the present invention, a binder constituent is preferably referred to, when there is no other binder constituent in the coating composition, which is present in a higher proportion based on the total weight of the coating material composition.

The term "polymer" is known to the person skilled in the art and, for the purposes of the present invention, encompasses polyadducts and polymerizates as well as polycondensates. The term "polymer" includes both homopolymers and copolymers.

The at least one polymer used as constituent (A) may be self-crosslinking or non-self-crosslinking. Suitable polymers which can be used are, for example, known from EP 0 228 003 A1, DE 44 38 504 A1, EP 0 593 454 B1, DE 199 48 004 A1, EP 0 787 159 B1, DE 40 09 858 A1, DE 44 37 535 A1, WO 92/15405 A1 and WO 2005/021168 A1.

The at least one polymer used as constituent (A) is preferably selected from the group consisting of polyurethanes, polyureas, polyesters, polyamides, polyethers, poly(meth)acrylates and/or copolymers of the structural units of said polymers, in particular polyurethane-poly(meth)acrylates and/or polyurethane polyureas. The at least one polymer used as constituent (A) is particularly preferably selected from the group consisting of polyurethanes, polyesters, poly(meth)acrylates and/or copolymers of the structural units of said polymers.

The term "(meth) acryl" or "(meth) acrylate" or (meth)acrylic" in the context of the present invention in each case comprises the meanings "methacryl" and/or "acryl" "methacrylic" and/or "acrylic" or "methacrylate" and/or "acrylate". Therefore, a "(meth)acrylic copolymer" in general may be formed from only "acrylic monomers", only "methacrylic monomers" or "acrylic and methacrylic monomers". However, polymerizable monomers other than acrylic and/or methacrylic monomers as e.g. styrene and the like may also be contained in a "(meth)acrylic copolymer". In other words a (meth)acrylic polymer may consist of only acrylic and/or methacrylic monomer units but does not have to. The notation "(meth)acrylate polymer or copolymer" or "(meth)acrylic polymer or copolymer" is intended to mean that the polymer/copolymer (polymer skeleton/backbone) is formed predominantly, i.e. preferably more than 50% or more than 75% of the monomer units used, from monomers having a (meth)acrylate group. In the preparation of a (meth)acrylic copolymer, preferably more than 50% or 75% of the monomers thus have a (meth)acrylate group. However, the use of further monomers as comonomers such as copolymerizable vinyl monomers, e.g. styrene, for its preparation is not excluded.

Preferred polyurethanes are described, for example, in German patent application DE 199 48 004 A1, page 4, line 19 to page 11, line 29 (polyurethane prepolymer B1), in European patent application EP 0 228 003 A1, page 3, line 24 to page 5, Line 40, European Patent Application EP 0 634 431 A1, page 3, line 38 to page 8, line 9, and international patent application WO 92/15405, page 2, line 35 to page 10, line 32.

Preferred polyesters are described, for example, in DE 4009858 A1 in column 6, line 53 to column 7, line 61 and column 10, line 24 to column 13, line 3 or WO 2014/033135 A2, page 2, line 24 to page 7, line 10 and page 28, line 13 to page 29, line 13 described. Likewise preferred polyesters are polyesters having a dendritic structure or star-shaped structure, as described, for example, in WO 2008/148555 A1.

Preferred polyurethane-poly(meth)acrylate copolymers (e.g., (meth)acrylated polyurethanes)) and their preparation are described, for example, in WO 91/15528 A1, page 3, line 21 to page 20, line 33 and in DE 4437535 A1, page 2, line 27 to page 6, line 22 described.

Particularly preferred are (meth)acrylic copolymer, in particular when they are OH-functional. Hydroxyl-containing monomers include hydroxy alkyl esters of acrylic or methacrylic acid, which can be used for preparing the copolymer. Non-limiting examples of hydroxyl-functional monomers include hydroxyethyl(meth)acrylate, hydroxypropyl(meth)acrylates, hydroxybutyl-(meth)acrylates, hydroxyhexyl(meth)-acrylates, propylene glycol mono(meth)acrylate, 2,3-dihydroxypropyl(meth)acrylate, pentaerythritol mono(meth)acrylate, polypropylene glycol mono(meth)acrylates, polyethylene glycol mono(meth)acrylates, reaction products of these with epsilon-caprolactone, and other hydroxyalkyl-(meth)acrylates having branched or linear alkyl groups of up to about 10 carbons, and mixtures of these. Hydroxyl groups on a vinyl polymer such as an (meth)acrylic polymer can be generated by other means, such as, for example, the ring opening of a glycidyl group, for example from copolymerized glycidyl methacrylate, by an organic acid or an amine. Hydroxyl functionality may also be introduced through thio-alcohol compounds, including, without limitation, 3-mercapto-1-propanol, 3-mercapto-2-butanol, 11-mercapto-1-undecanol, 1-mercapto-2-propanol, 2-mercaptoethanol, 6-mercapto-1-hexanol, 2-mercaptobenzyl alcohol, 3-mercapto-1,2-proanediol, 4-mercapto-1-butanol, and combinations of these. Any of these methods may be used to prepare a useful hydroxyl-functional (meth)acrylic polymer.

Examples of suitable comonomers that may be used include, without limitation, α,β-ethylenically unsaturated monocarboxylic acids containing 3 to 5 carbon atoms such as acrylic, methacrylic, and crotonic acids and the alkyl and cycloalkyl esters, nitriles, and amides of acrylic acid, methacrylic acid, and crotonic acid; α,β-ethylenically unsaturated dicarboxylic acids containing 4 to 6 carbon atoms and the anhydrides, monoesters, and diesters of those acids; vinyl esters, vinyl ethers, vinyl ketones, and aromatic or heterocyclic aliphatic vinyl compounds. Representative examples of suitable esters of acrylic, methacrylic, and crotonic acids include, without limitation, those esters from reaction with saturated aliphatic alcohols containing 1 to 20 carbon atoms, such as methyl, ethyl, propyl, isopropyl, n-butyl, isobutyl, tert-butyl, hexyl, 2-ethylhexyl, dodecyl, 3,3,5-trimethylhexyl, stearyl, lauryl, cyclohexyl, alkyl-substituted cyclohexyl, alkanol-substituted cyclohexyl, such as 2-tert-butyl and 4-tert-butyl cyclohexyl, 4-cyclohexyl-1-butyl, 2-tert-butyl cyclohexyl, 4-tert-butyl cyclohexyl, 3,3,5,5,-tetramethyl cyclohexyl, tetrahydrofurfuryl, and isobornyl acrylates, methacrylates, and crotonates; unsaturated dialkanoic acids and anhydrides such as fumaric, maleic, itaconic acids and anhydrides and their mono-and diesters with alcohols such as methanol, ethanol, propanol, isopropanol, butanol, isobutanol, and tert-butanol, like maleic anhydride, maleic acid dimethyl ester and maleic acid monohexyl ester; vinyl acetate, vinyl propionate, vinyl ethyl ether, and vinyl ethyl ketone; styrene, a-methyl styrene, vinyl toluene, 2-vinyl pyrrolidone, and p-tert-butylstyrene.

The (meth)acrylic copolymer may be prepared using conventional techniques, such as by heating the monomers in the presence of a polymerization initiating agent and optionally a chain transfer agent.

Suitable poly(meth) acrylates are also those which can be prepared by multistage free-radical emulsion polymerization of olefinically unsaturated monomers in water and/or organic solvents. For example, seed-core-shell polymers (SCS polymers) are particularly preferred. Such polymers or aqueous dispersions containing such polymers are known, for example, from WO 2016/116299 A1. Particularly preferred seed-core-shell polymers are polymers, preferably those having an average particle size of 100 to 500 nm, which can be prepared by successive free-radical emulsion polymerization of three preferably different monomer mixtures (A1), (B1) and (C1) of olefinic unsaturated monomers in water, wherein the mixture (A1) contains at least 50 wt .-% of monomers having a solubility in water of less than 0.5 g / l at 25 ° C and a polymer which is prepared from the mixture (A1), has a glass transition temperature of 10 to 65 ° C, the mixture (B1) contains at least one polyunsaturated monomer, and a polymer prepared from the mixture (B1) has a glass transition temperature of -35 to 15 ° C, and a polymer which is prepared from the mixture (C1) has a glass transition temperature of -50 to 15 ° C, and wherein i. first the mixture (A1) is polymerized, ii. then the mixture (B1) in the presence of the polymer formed under i. is polymerized, and iii. then the mixture (C1) in the presence of the polymer formed under ii. is polymerized. All three mixtures are preferably different from one another.

Preferred polyurethane-polyurea copolymers are polyurethane-polyurea particles, preferably those having a Z-average particle size of 40 to 2000 nm, the polyurethane-polyurea particles, each in reacted form, containing at least one isocyanate group-containing polyurethane prepolymer containing anionic and/or groups which can be converted into anionic groups and at least one polyamine containing two primary amino groups and one or two secondary amino groups. Preferably, such copolymers are used in the form of an aqueous dispersion. Such polymers can in principle be prepared by conventional polyaddition of, for example, polyisocyanates with polyols and polyamines.

The polymer used as constituent (A) has crosslinkable functional groups, which enable a crosslinking reaction with melamine resin (B). Any common suitable crosslinkable reactive functional group known to those skilled in the art can be present. Preferably, the polymer used as constituent (A) has at least one kind of functional reactive groups selected from the group consisting of hydroxyl groups, thiol groups, carboxyl groups and carbamate groups. Preferably, the polymer used as constituent (a1) has functional hydroxyl groups and/or carbamate groups, in particular hydroxyl groups.

Preferably, the polymer used as constituent (A) is hydroxy-functional and more preferably has an OH number in the range of 15 to 400 mg KOH / g, more preferably from 20 to 250 mg KOH/g.

The polymer used as constituent (A) is particularly preferably a hydroxy-functional poly (meth)acrylate copolymer and/or a hydroxy-functional polyester.

Preferably, the at least one polymer (A) is present in the coating material composition in an amount in a range of from 10.0 to 60 wt.-%, more preferably of from 11.0 to 55 wt.-%, even more preferably of from 12.0 to 45 wt.-%, still more preferably of from 13.0 to 40 wt.-%, in each case based on the total weight of the coating material composition.

### Constituent (B) - Melamine resin

The coating material composition comprises at least one melamine resin as constituent (B) and as crosslinking agent, preferably in a monomeric form, which has crosslinkable functional groups, which can in turn be crosslinked at least with the crosslinkable functional groups of polymer (A), in particular when catalyzed by the at least one crosslinking catalyst (E). Crosslinking agents are to be included among the film-forming non-volatile components of a coating composition, and therefore fall within the general definition of the "binder" as mentioned hereinbefore.

Preferably, the at least one melamine resin (B) is a melamine aldehyde resin. Examples of suitable aldehydes include those resulting in a C₁ to C₈ group bonded to a nitrogen atom pending from the triazene ring of the melamine, which C1 to C8 alcohol group takes the place of a nitrogen-bonded hydrogen atom. Specific examples of suitable aldehydes include, but are not limited to, formaldehyde, acetaldehyde, propaldehyde, butyraldehyde, and combinations thereof. Formaldehyde is particularly preferred. Preferably, the at least one melamine resin (B) is a formaldehyde resin, more preferably a monomeric melamine formaldehyde resin, even more preferably a hexamethoxyalkyl melamine formaldehyde resin, in particular a hexamethoxyalkyl melamine formaldehyde resin selected from the group consisting of hexamethoxymethyl melamine formaldehyde resins, hexamethoxybutyl melamine formaldehyde resins, hexamethoxy(methyl and butyl) melamine formaldehyde resins, and mixtures thereof.

The aldehyde and the melamine are typically reacted at a stoichiometric ratio of aldehyde to melamine of from 5.4:1 to 6:1, preferably from 5.7:1 to 6:1, more preferably from 5.9:1 to 6:1. Stated differently, the reactive sites in the melamine, i.e., the imino groups, can be either partially or completed reacted as a result of reaction of the aldehyde and the melamine. Theoretically, a ratio of aldehyde to melamine of 5.4:1 should result in a content of alkylol groups in the resulting product, after reaction of the aldehyde and the melamine but prior to any further reaction such as with an alcohol in a subsequent etherification, of about 90%, based on the total number of reactive sites present in the melamine prior to reaction. Likewise, a ratio of aldehyde to melamine of 5.7:1 should result in a content of alkylol groups of about 95%, a ratio of aldehyde to melamine of 5.9:1 should result in a content of alkylol groups of about 99%, and a ratio of aldehyde to melamine of 6:1 should result in a content of alkylol groups of about 100%, all prior to any further reaction such as with an alcohol and all based on the total number of reactive sites present in the melamine prior to reaction. The reactive sites from the melamine that are unreacted after reaction of the aldehyde and the melamine remain as imino groups in the resulting product.

Preferably, melamine resin (B) has a content of imino groups of less than or equal to 10% (corresponding to a ratio of aldehyde to melamine of about 5.4:1), more preferably of less than about 5% (corresponding to a ratio of aldehyde to melamine of about 5.7:1), still more preferably of less than about 3%, even more preferably of less than about 1% (corresponding to a ratio of aldehyde to melamine of about 5.9:1), based in each case on the total number of reactive sites present in the melamine prior to reaction. The remainder of the groups in the melamine resin (B), if any, preferably are alkoxyalkyl groups.

The melamine resin (B) preferably contains alkylol groups, more preferably methylol and/or other alkylol groups such as butylol groups. Preferred butylol groups are n-butyol groups. Methylol groups or mixtures of methylol and butylol groups are also possible. Most preferred are methylol groups.

At least some of the alkylol groups present in the melamine resin (B) may be alkylated through further reaction with at least one alcohol to produce nitrogen-bonded alkoxyalkyl groups. In particular, the hydroxyl groups in the nitrogen-bonded alkylol groups may be reacted with the alcohol through an etherification reaction to produce nitrogen-bonded alkoxyalkyl groups. The alkoxyalkyl groups are available for a crosslinking reaction with, for example, suitable crosslinkable functional groups of polymer (A) such as OH- and/or carbamate groups. The remaining imino groups present in the melamine resin (B) after the aldehyde/melamine reaction are unreactive with the alcohol used for alkylation. Some of the remaining imino groups may react with the hydroxyl group in a nitrogen-bonded alkylol group from another melamine to form a bridging unit. However, most of the remaining imino groups remain unreacted.

As outlined above the alkylol groups of the melamine resin (B) may be partially alkylated. By "partially alkylated", it is meant that a sufficiently low amount of alcohol is reacted with the melamine resin (B) to leave some of the alkylol groups in the melamine resin (B), under reaction conditions that should result in incomplete alkylation of the alkylol groups. When the melamine resin (B) is partially alkylated, it is typically alkylated with alcohol in amounts sufficient to leave alkylol groups present in the aminoplast in an amount of at least about 7%, more preferably of from about 10% to about 50%, even more preferably of from about 15% to about 40%, in each case based on the total number of reactive sites present in the melamine prior to reaction. Typically, the melamine resin (B) is partially alkylated to obtain from about 40 to about 93% of alkoxyalkyl groups, more preferably of from about 50% to about 90%, even more preferably of from about 60% to about 75%, in each case based on the total number of reactive sites present in the melamine prior to reaction. Thus, when partially alkylated, the melamine resin (B) is typically alkylated with at least one alcohol in a stoichiometric amount of hydroxyl groups in the alcohol to alkylol groups in the melamine resin (B) of from about 0.5:1.0 to about 0.93:1.0, more preferably o from about 0.60:1.0 to about 0.9:1.0, even more preferably of from about 0.6:1 to about 0.85:1.0.

Preferably, at least a portion, more preferably only a portion, of the alkylol groups such as methylol groups of the melamine resin (B), is etherified by reaction with at least one alcohol. Any monohydric alcohol can be employed for this purpose, including methanol, ethanol, n-propanol, iso-propanol, n-butanol, sec-butanol, t-butanol, pentanol, hexanol, heptanol, as well as benzyl alcohol and other aromatic alcohols, cyclic alcohols such as cyclohexanol, monoethers of glycols, and halogen-substituted or other substituted alcohols such as 3-chloropropanol and butoxyethanol. In particular, melamine resin (B) is partially with methanol and/or butanol, most preferred with methanol and/or n-butanol.

Preferably melamine resin (B) is a melamine aldehyde resin, in particular a melamine formaldehyde resin, bearing alkylol groups, preferably methylol and/or butylol groups, as crosslinkable functional groups, preferably in an amount of at least 90%, based on the total number of reactive sites present in the melamine prior to reaction with the aldehyde, and preferably has a content of imino groups of equal to or less than 10%, more preferably of equal to or less than 5%, still more preferably of equal to or less than 3%, in particular of equal to or less than 1%, in each case based on the total number of reactive sites present in the melamine prior to reaction with the aldehyde.

Melamine formaldehyde resins as melamine resins (B) including at least one methylol group (-CH₂OH) and/or at least one alkoxymethyl group of general formula - CH₂OR¹, where R¹ is an alkyl chain having of from 1 to 20 carbon atoms, preferably of from 1 to 6 carbon atoms, more preferably from 1 to 4 carbon atoms, and combinations thereof, are particularly preferred. Most preferred are hexamethoxymethyl melamine (HMMM) and/or hexamethoxybutyl melamine (HMBM), with (HMMM) being in particular preferred. Melamine resins comprising with a combination of methoxybutyl and methoxymethyl groups are also suitable as melamine resins (B).

The alkylol and alkoxyalkyl groups of the melamine resin (B) (e.g., the CH₂OCH₃ ether groups of HMMM) are particularly reactive with e.g., OH-groups and/or carbamate groups of a polymer (A) such as an OH-functional and/or carbamate-functional polymer (A), in particular when catalyzed by an acidic catalyst (E) such as an unblocked sulfonic acid used as crosslinking catalyst (E).

Preferably, the at least one melamine resin (B) is present in the coating material composition in an amount in a range of from 7.5 to 35 wt.-%, more preferably of from 9.0 to 30 wt.-%, even more preferably of from 10.5 to 25 wt.-%, in each case based on the total weight of the coating material composition.

Preferably, the at least one film-forming polymer (A) and the at least one melamine resin (B) are present in the coating material composition in a relative weight ratio, based on their solids, in a range of from 5.0:1 to 1.1:1, in particular of from 2.70:1 to 1.25:1.

### Constituent (C) - Crosslinking catalyst

The coating material composition comprises at least one acidic crosslinking catalyst (C), which is suitable to catalyze a crosslinking reaction between at least the functional groups of the melamine resin (B) and the functional groups of polymer (A). Preferably, also a crosslinking reaction between the functional groups of the melamine resin (B) and the OH-groups of copolymer (F) can be catalyzed.

Preferably, the at least one crosslinking catalyst (C) is present in the coating material composition in an amount in the range of from 1.0 to 12 wt.-%, more preferably of from 1.5 to 10 wt.-%, even more preferably of from 2.0 to 8.5 wt.-%, in each case based on the total solids content of the coating material composition.

Suitable acidic catalysts (C) are, in particular, phosphorus-containing and/or sulfur-containing catalyst, more particularly phosphorus-containing and nitrogen-containing and/or sulfur-containing and nitrogen-containing catalysts. Preferably, such organic catalysts (C) are used.

Examples of suitable phosphorus-containing catalysts are preferably substituted phosphonic diesters and diphosphonic diesters, preferably from the group consisting of acyclic phosphonic diesters, cyclic phosphonic diesters, acyclic diphosphonic diesters and cyclic diphosphonic diesters. Catalysts of these kinds are described for example in German patent application DE-A-102005045228. More particularly, however, use is made of preferably substituted phosphoric monoesters and phosphoric diesters, preferably from the group consisting of acyclic phosphoric diesters and cyclic phosphoric diesters, more preferably amine adducts of phosphoric monoesters and diesters.

Examples of suitable sulfur-containing catalysts are in particular sulfonic acids. Examples of sulfonic acids are para-toluenesulfonic acid (pTSA), methanesulfonic acid (MSA), dodecylbenzene sulfonic acid (DDBSA), dinonylnaphthalene disulfonic acid (DNNDSA), and mixtures thereof.

Such phosphorus-containing and/or sulfur-containing catalysts can be used as such, i.e. in an unblocked form. Preferably, however, these catalysts are used in a form blocked with at least one amine, more preferably blocked with at least one organic amino compound.

Examples of amines for blocking are, in particular, tertiary amines, examples being bicyclic amines, such as diazabicyclooctane (DABCO), diazabicyclononene (DBN), diazabicycloundecene (DBU), dimethyldodecylamine or triethylamine, for example. Particularly preferred for blocking is the use of tertiary amines, which ensure high activity of the catalyst under the curing conditions.

Used with very particular preference as catalyst are corresponding amine-blocked phosphoric esters such as amine-blocked ethylhexyl phosphates and amine-blocked phenyl phosphates, very preferably amine-blocked bis(2-ethylhexyl) phosphate. Certain amine-blocked phosphoric acid catalysts are also available commercially (e.g. Nacure types from King Industries). For example, Nacure^{®} 4167 from King Industries may be mentioned as a particularly suitable catalyst based on an amine-blocked phosphoric acid partial ester.

### Constituent (D) - Water and/or organic solvent(s)

The coating material composition comprises water and/or at least one organic solvent as constituent (D). Suitable organic solvents have already been mentioned before. If the coating material composition is solventborne it preferably does not contain any water. If the coating material composition is waterborne it contains water and may contain additionally at least one organic solvent, however, in lower amounts than water. This has also been outlined and explained hereinbefore.

### Constituent (E) - Pigment

The coating material composition comprises at least one pigment (E).

The term "pigment" is known to the skilled person, from DIN 55943 (date: October 2001), for example. A "pigment" in the sense of the present invention refers preferably to a component in powder or flake form which is substantially, preferably entirely, insoluble in the medium surrounding them, such as in the inventive coating composition. Pigments are preferably colorants and/or substances which can be used as pigment on account of their magnetic, electrical and/or electromagnetic properties. Pigments differ from "fillers" preferably in their refractive index, which for pigments is ≥ 1.7. The term "filler" is known to the skilled person, from DIN 55943 (date: October 2001), for example. For filler, their refractive index is <1.7.

The term "pigment" includes color pigments and effect pigments and color and effect pigments. Effect pigments are preferably pigments which have an optical effect or a color and optical effect. Examples of effect pigments are platelet-shaped metallic effect pigments such as platelet-shaped aluminum pigments, gold bronzes, fire-colored bronzes and/or iron oxide-aluminum pigments, perglaze pigments and/or metal oxide-mica pigments (mica). A person skilled in the art is familiar with the concept of color pigments. The terms "coloring pigment" and "color pigment" are interchangeable. As a color pigment inorganic and/or organic pigments can be used. Preferably, the color pigment is an organic color pigment. Particularly preferred color pigments used are white pigments, colored pigments and/or black pigments.

Preferably, the at least one pigment is present in the coating material composition in an amount in the range of from 1.0 to 40 wt.-%, more preferably of from 2.0 to 35 wt.-%, still more preferably of from 5.0 to 30 wt.-%, in each case based on the total weight of the coating composition.

### Constituent (F) - Block copolymer

The coating material composition comprises at least one OH-functional (meth)acrylic block copolymer, wherein the copolymer contains side chains at least within a part of its structural units forming at least one of the blocks, each side chain containing at least one aromatic moiety and each side chain being attached via an ester and/or ether bond.

Block copolymers are in particular linear block copolymers, branched block copolymers and star-shaped block copolymers. Most preferred are linear block copolymers. The inventively used copolymer (F) has a block-like sequence of copolymerized structural units derived at least partially from suitable ethylenically unsaturated monomers. However, (meth)acrylic monomers are necessarily used at least in part for preparing copolymer (F). As outlined hereinbefore "(meth)acrylate copolymer" or "(meth)acrylic copolymer" means that the copolymer (polymer skeleton/backbone) is formed predominantly, i.e. preferably from more than 50% or more than 75% of the monomer units used, from monomers having a (meth)acrylate group. In the preparation of a (meth)acrylic copolymer, preferably more than 50% or 75% of the monomers thus have a (meth)acrylate group. However, the use of further monomers as comonomers such as copolymerizable vinyl monomers, e.g. styrene, for its preparation is not excluded.

Preferably, copolymer (F) is a diblock copolymer, more preferably a linear diblock copolymer. Preferably, copolymer (F) is prepared by radical polymerization, in particular by atom transfer radical polymerization (ATRP), preferably in the presence of at least one organic solvent and/or at least one catalyst. Other techniques are, however, also possible such as reversible addition-fragmentation chain transfer polymerization (RAFT), single electron transfer living radical polymerization (SEL-LRP), nitroxide mediated radical polymerization (NMRP), living ring opening metathesis polymerization (ROMP) and living anionic and living cationic polymerization.

Block copolymers are copolymers obtained by adding at least two different ethylenically unsaturated monomers, two different mixtures of ethylenically unsaturated monomers or by adding an ethylenically unsaturated monomer and a mixture of ethylenically unsaturated monomers at different times in the practice of a controlled polymerization, wherein an ethylenically unsaturated monomer or a mixture of ethylenically unsaturated monomers is initially charged at the start of the reaction. At the time of adding the further ethylenically unsaturated monomer or the mixture of ethylenically unsaturated monomers or adding ethylenically unsaturated monomers in multiple installments, the ethylenically unsaturated monomers added at the start of the polymerization can be already completely reacted, or still be partly non-polymerized. As a result of such a polymerization, block copolymers may have at least one transition in their structural units along the polymer chain, said transition marking the boundary between the individual blocks. Suitable block copolymer structures are e.g. AB diblock copolymers, ABA triblock copolymers or ABC triblock copolymers. Block copolymers, which are preferably used according to the present invention, contain blocks having a minimum number of 3 structural units per block. The minimum number of structural units per block is preferably 3, more preferably 5 and most preferably 10. Each of the blocks may contain the same structural units, but each in different numbers, or is constructed of different structural units. The latter one is preferred.

Preferably, copolymer (F) is of the type A-B, A-B-A, B-A-B, A-B-C and/or A-C-B, in which the A, B and C blocks represent a differing composition of structural units, wherein the blocks A, B and C differ in their respective composition of structural units and/or wherein the amount of structural units in two adjacent blocks differs from each other by more than 5% by weight in each case. Most preferred are, however, AB diblock copolymers.

The copolymer contains side chains at least within a part of its structural units forming at least one of the blocks, preferably precisely one of the blocks, each side chain containing at least one aromatic moiety and each side chain being attached via an ester and/or ether bond. Preferably, each side chain is attached to the backbone of the copolymer. The backbone is generated by the polymerization of the monomers used. Preferably, each side chain is attached to the backbone of the copolymer via an ester and/or ether bond, preferably via an ester bond.

Preferably, copolymer (F) is a diblock copolymer, more preferably a linear diblock copolymer.

Preferably, at least a first block of copolymer (F) is prepared by polymerization of least one epoxide-group containing monomer, preferably of glycidyl (meth)acrylate, and optionally further monomers.

Preferably, at least a second block of copolymer (F) different from the first block is prepared by polymerization of at least one monomer selected from the group consisting of alkyl (meth)acrylate, hydroxyalkyl (meth)acrylate, polyalkylene glycol (meth)acrylate and polyethylene glycol alkyl ether (meth)acrylate, more preferably of at least alkyl (meth)acrylate, even more preferably of at least one hydroxyalkyl (meth)acrylate, and optionally further monomers.

Preferably, at least part of the epoxide groups of the first block of the formed copolymer are reacted with at least one aromatic component bearing at least one, preferably precisely one, carboxylic acid group, and optionally bearing one or more OH-groups, preferably at least two OH-groups. Preferably, more than 85 mol-%, more preferably more than 90 mol.%, in particular more than 95 mol-% of all epoxide groups have been reacted. It is also possible that all epoxide groups have undergone reaction.

In particular,
at least a first block of copolymer (F) is prepared by polymerization of least one epoxide-group containing monomer, preferably of glycidyl (meth)acrylate, and optionally further monomers, and
at least a second block different from the first block is prepared by polymerization of at least one alkyl (meth)acrylate, preferably at least one hydroxyalkyl (meth)acrylate, and optionally further monomers,
followed by reaction of at least part of the epoxide groups of the first block of the formed copolymer with at least one aromatic component bearing at least one, preferably precisely one, carboxylic acid group, and optionally bearing one or more OH-groups, preferably at least two OH-groups.

Preferably, the alkyl (meth)acrylate described hereinabove is selected from the group consisting of methyl (meth)acrylate, ethyl (meth)acrylate, propyl (meth)acrylate, isopropyl (meth)acrylate, butyl (meth)acrylate, isobutyl (meth)acrylate, hexyl (meth)acrylate, 2-ethylhexyl (meth)acrylate, nonyl (meth)acrylate, lauryl (meth)acrylate, stearyl (meth)acrylate and isodecyl (meth)acrylate. More preferably, the alkyl (meth)acrylate described hereinabove is selected from the group consisting of methyl (meth)acrylate, ethyl (meth)acrylate, propyl (meth)acrylate, isopropyl (meth)acrylate, butyl (meth)acrylate and isobutyl (meth)acrylate.

Preferably, the hydroxyalkyl (meth)acrylate described hereinabove is selected from the group consisting of 2-hydroxyethyl (meth)acrylate, 2-hydroxypropyl (meth)acrylate, 3-hydroxypropyl (meth)acrylate and 2-hydroxybutyl (meth)acrylate as well as 4-hydroxybutyl (meth)acrylate.

Preferably, the polyethylene glycol alkyl ether (meth)acrylate described hereinabove is selected from the group consisting of polyethylene glycol methylether acrylate, polyethylene glycol ethyl ether acrylate, polyethylene glycol propyl ether acrylate and
polyethylene glycol butyl ether acrylate.

Preferably, block copolymer (F) is a diblock copolymer and contains a first block, which is prepared by polymerization of least one epoxide-group containing monomer, preferably of glycidyl (meth)acrylate, and a second block being different from the first block, which is prepared by polymerization of at least one alkyl (meth)acrylate, preferably at least one hydroxyalkyl (meth)acrylate, followed by reaction of at least part of the epoxide groups of the first block of the formed copolymer with at least one aromatic component bearing at least one, preferably precisely one, carboxylic acid group, and optionally bearing one or more OH-groups, preferably at least two OH-group. Preferably, the diblock copolymer contains structural monomeric units as first block in a range of from 10 to 50 mol.%, and contains structural monomeric units as second block in a range of from 90 to 50 mol.%. More preferably, the diblock copolymer contains structural monomeric units as first block in a range of from 20 to 40 mol.%, and contains structural monomeric units as second block in a range of from 80 to 60 mol.%.

The copolymer (F) is used as dispersant for the at least one pigment (E) present in the coating composition.

The aforementioned aromatic component, preferably aromatic compound, bearing at least one, preferably precisely one, carboxylic acid group, and optionally bearing one or more OH-groups, preferably at least two OH-groups is preferably used for incorporation of the aromatic moiety into the side chains. Preferably, said aromatic moiety bears one or more OH-groups, more preferably at least two OH-groups. If these OH-groups are present and at least one hydroxyalkyl (meth)acrylate has been used for preparing at least one further block of the copolymer, OH-groups are present in both at least two blocks of the copolymer (F).

Preferred aromatic components are 3,5-dihydroxy naphthoic acid, 1,4-dihydroxy naphthoic acid, 3,4-dihydroxy benzoic acid, 3,4,5-trihydroxy benzoic acid and

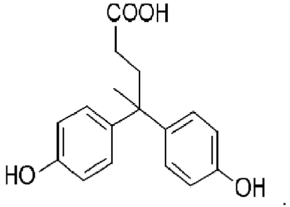

Preferably, copolymer (F) has a polydispersity in the range of from ≥ 1.2 to ≤ 20, more preferably of from ≥ 1.2 to ≤ 10 or of from 1.1 to 10.0, even more preferably of from ≥ 1.2 to ≤ 3.5 or of from 1.2 to 5.0, yet more preferably of from ≥ 1.2 to ≤ 2.2 or of from >1.2 to 2.5. In particular, the at least one copolymer (F) has a polydispersity in the range of from >1.0 to ≤ 10.0, preferably of from 1.1 to 1.9, more preferably of from 1.2 to 1.8, even more preferably of from 1.3 to 1.7. The polydispersity, also referred to as polydispersity index (PDI) is the ratio of M_{w}/Mₙ is determined according to the method disclosed in the 'Methods' section.

Preferably, the at least one copolymer (F) has a number average molecular weight (Mₙ) in the range of from 1 000 to 25 000 g/mol, more preferably of from 1 000 to 15 000 g/mol. Mₙ is determined according to the method disclosed in the 'Methods' section.

Preferably, the at least one copolymer (F) has a weight average molecular weight (M_{w}) in the range of from 2000 to 40 000 g/mol, more preferably of from 3000 to 30 000 g/mol. M_{w} is determined according to the method disclosed in the 'Methods' section.

Preferably, the at least one copolymer (F) has an OH-number in the range of from 100 to 400 mg KOH/g, more preferably of from 150 to 320 mg KOH/g.

Preferably, the pigment (E) to copolymer (F) weight ratio in the coating material composition is in the range of from 0.25 to 20.0, preferably of from 0.35 to 19.5, more preferably in the range of from 0.45 to 19.0, even more preferably of from 0.55 to 15.0, in particular of from 0.65 to 10.

Preferably, copolymer (F) is present in the coating material composition in an amount in the range of from 0.10 to 5.0 wt.-%, preferably of from 0.15 to 4.5 wt.-%, in particular of from 0.2 to 4.0 wt.-%, in each case based on the total weight of the coating composition.

Preferably, copolymer (F) is present in the coating material composition in an amount in the range of from 0.20 to 12.0 wt.-%, preferably of from 0.30 to 10.0 wt.-%, in particular of from 0.50 to 8.5 wt.-%, in each case based on the total solids content of the coating composition.

Preferably, the at least one pigment (E) and the at least one copolymer (F) are incorporated into the coating material composition in the form of a pigment paste. Representative examples of the methods for preparing pigment pastes include, but are not limited to, the use of energy intensive mixing or grinding using ball mills or media mills known by a person skilled in the art.

### Optional constituent(s) (G)

The inventive coating material composition may contain - besides the mandatory constituents outlined hereinbefore - one or more commonly used additives depending on the desired application. For example, the coating material composition may comprise at least one additive selected from the group consisting of reactive diluents, light stabilizers, antioxidants, deaerators, emulsifiers, slip additives, polymerization inhibitors, plasticizers, initiators for free-radical polymerizations, adhesion promoters, flow control agents, film-forming auxiliaries, sag control agents (SCAs), flame retardants, corrosion inhibitors, siccatives, thickeners, biocides and/or matting agents. They can be used in the known and customary proportions. Preferably, their content, based on the total weight of the coating material composition is 0.01 to 20.0 wt.-%, more preferably 0.05 to 15.0 wt.-%, particularly preferably 0.1 to 10.0 % by weight, most preferably from 0.1 to 7.5% by weight, especially from 0.1 to 5.0% by weight and most preferably from 0.1 to 2.5% by weight.

The inventive coating material composition may contain - besides the mandatory constituents outlined hereinbefore - one or more fillers. Examples of suitable fillers are kaolin, dolomite, calcite, chalk, calcium sulfate, barium sulfate, talc, silicic acids, in particular pyrogenic silicic acids, hydroxides such as aluminum hydroxide or magnesium hydroxide or organic fillers such as textile fibers, cellulose fibers and/or polyolefine fibers; in addition, reference is made to Römpp Lexikon Lacke und Druckfarben, Georg Thieme Verlag, 1998, pages 250 ff., "Fillers".

Preferably, the at least one optional filler is present in the coating material composition in an amount in the range of from 1.0 to 40 wt.-%, more preferably of from 2.0 to 35 wt.-%, still more preferably of from 5.0 to 30 wt.-%, in each case based on the total weight of the coating composition.

### Inventive method of forming a coating film

A further subject-matter of the present invention is a method of forming a coating film onto at least one surface of a substrate, wherein said method comprises at least one method step of applying the inventive coating material composition at least partially onto at least one surface of an optionally pre-coated substrate to form a coating film on the surface of the substrate.

All preferred embodiments described hereinbefore in connection with the inventive coating material composition are also preferred embodiments with regard to the aforementioned inventive method.

### Inventive method of preparing a multilayer coating system

A further subject-matter of the present invention is a method of preparing a multilayer coating system onto an optionally pre-coated substrate comprising at least steps (2), (4) and (5), and optionally step(s) (1) and/or (3), namely
(1) optionally applying a primer composition to an optionally pre-coated substrate and forming an primer coating film on the optionally pre-coated substrate,
(2) applying a basecoat composition to an optionally pre-coated substrate or - in case step (1) is performed - to the primer coating film of the substrate obtained from step (1) and forming a basecoat coating film adjacent to the primer coating film,
(3) optionally applying a second basecoat composition different from the basecoat composition applied in step (2) to the basecoat coating film present on the substrate obtained after step (2) prior to curing said basecoat coating film and forming a second basecoat coating film adjacent to the basecoat coating film already present on the substrate,
(4) applying a topcoat composition to the basecoat coating film present on the substrate obtained after step (2) prior to curing said basecoat coating film and forming a topcoat coating film adjacent to the basecoat coating film or - in case step (3) is performed - to the second basecoat coating film present on the substrate obtained after step (3) prior to curing said second basecoat coating film and forming a topcoat coating film adjacent to the second basecoat coating film, and
(5) jointly curing at least the basecoat film and the topcoat film obtained after steps (2) and (4) and optionally also - if present - the primer coating film and/or the second basecoat film obtained after step(s) (1) and/or (3) to obtain a multilayer coating system,
wherein the inventive coating material composition is used as basecoat composition in step (2) when step (3) is not performed, or is used as basecoat composition in step (2) or as second basecoat composition in step (3) when step (3) is performed. When step (3) is performed, the inventive coating material composition preferably is used as basecoat composition in step (2).

All preferred embodiments described hereinbefore in connection with the inventive coating material composition and the inventive method of forming a coating film are also preferred embodiments with regard to the aforementioned inventive method of preparing a multilayer coating system.

The optional primer coating film, basecoat film, optional second coating film and topcoat coating film formed on the optionally pre-coated substrate by performing at least steps (2) and (4) and optionally step(s) (1) and/or (3) are at this stage preferably each uncured coating films. Thus, the coating compositions applied in each of these steps are preferably applied wet-on-wet. It is, however, e.g., also possible to cure the primer coating film before applying the inventive coating material composition as basecoat composition.

In case only steps (2), (4) and (5) of the inventive method are performed, the method is a 2C1B process. In case steps (2), (4) and (5) as well as one of optional steps (1) or (3) of the inventive method are performed, the method is a 3C1B process. In case steps (2), (4) and (5) as well as both optional steps (1) and (3) of the inventive method are performed, the method is a 4C1B process.

Preferably, all steps (1), (2), (3) and (4) are performed via spray application.

The method of the invention is particularly suitable for the coating of automotive vehicle bodies or parts thereof including respective metallic substrates, but also plastic substrates such as polymeric substrates. Consequently, the preferred substrates are automotive vehicle bodies or parts thereof.

Suitability as metallic substrates used in accordance with the invention are all substrates used customarily and known to the skilled person. The substrates used in accordance with the invention are preferably metallic substrates, more preferably selected from the group consisting of steel, preferably steel selected from the group consisting of bare steel, cold rolled steel (CRS), hot rolled steel, galvanized steel such as hot dip galvanized steel (HDG), alloy galvanized steel (such as, for example, Galvalume, Galvannealed or Galfan) and aluminized steel, aluminum and magnesium, and also Zn/Mg alloys and Zn/Ni alloys. Particularly suitable substrates are parts of vehicle bodies or complete bodies of automobiles for production.

Preferably, thermoplastic polymers are used as plastic substrates. Suitable polymers are poly(meth)acrylates including polymethyl(meth)acrylates, polybutyl (meth)acrylates, polyethylene terephthalates, polybutylene terephthalates, polyvinylidene fluorides, polyvinyl chlorides, polyesters, including polycarbonates and polyvinyl acetate, polyamides, polyolefins such as polyethylene, polypropylene, polystyrene, and also polybutadiene, polyacrylonitrile, polyacetal, polyacrylonitrile-ethylene-propylene-diene-styrene copolymers (A-EPDM), ASA (acrylonitrile-styrene-acrylic ester copolymers) and ABS (acrylonitrile-butadiene-styrene copolymers), polyetherimides, phenolic resins, urea resins, melamine resins, alkyd resins, epoxy resins, polyurethanes, including TPU, polyetherketones, polyphenylene sulfides, polyethers, polyvinyl alcohols, and mixtures thereof. Polycarbonates and poly(meth)acrylates are especially preferred.

The substrate used in accordance with the invention is preferably a metallic substrate pretreated with at least one metal phosphate such as zinc phosphate and/or pretreated with at least one an oxalate. A pretreatment of this kind by means of phosphating, which takes place normally after the substrate has been cleaned and before the substrate is electrodeposition-coated, is in particular a pretreatment step that is customary in the automobile industry.

As outlined above the substrate used may be a pre-coated substrate, i.e. a substrate bearing at least one cured coating film. The substrate used in optional step (1) or in step (2) can be pre-coated with a cured electrodeposition coating layer. The substrate can, e.g., be provided additionally or alternatively with at least one cured or uncured sealer coating film as at least one additional pre-coat. The term "sealer" is known to a person skilled in the art. A sealer is typically applied in comparably high dry film thicknesses such as in a dry film thickness after curing in a range of from 1 to 5 mm, preferably of from 2 to 4 mm. In contrast to a primer, a sealer is thus applied in significantly higher film thicknesses. Moreover, a sealer is typically only applied to certain areas of a substrate such as an automobile. For example, a sealer is often applied on interior areas of an automobile part, for example where one sheet of a metal substrate overlaps with another. A sealer can be pumped into flange areas to provide a moisture/corrosion barrier. It is typically a very high viscosity material, but sprayable versions are available as well. Preferably, the sealer is a PVC sealer. Thus, in particular a PVC sealer can be applied, preferably after the substrate has been provided with a cured electrodeposition coating layer and preferably before a primer composition is applied. A person skilled in the art is aware of the term "PVC sealer". Such a sealer comprises or preferably consists of solid PVC particles dispersed in a liquid plasticizer such as at least one phthalate. Upon heating to e.g. 120-150 °C, the plasticizer swells the PVC particles and eventually forms a continuous PVC phase, at which point the sealer is gelled or cured. The sealer can also contain additives such as pigments, desiccants such as calcium oxide, and additives such as amine additives. In case a cured sealer coating film is also present, the cured electrodeposition coating film is optionally present underneath and preferably adjacent to the cured sealer coating film. Curing of this sealer may take place at temperatures in the range of from 40 to 140°C.

Preferably, the optionally pre-coated substrate used in step (2) or in optional step (1) of the inventive method is a substrate at least bearing a cured sealer coating layer and optionally also a cured electrodeposition coating layer underneath the sealer layer.

### Optional step (1)

In optional step (1) a primer composition is applied to an optionally pre-coated substrate and a primer coating film is formed on the optionally pre-coated substrate. Preferably, the primer composition is applied such that the resulting primer coating film after curing has a dry film thickness in a range of from 10 to 30 µm.

Preferably, the inventive method further comprises a step (1a), which is carried out after optional step (1) and before step (2). In said step (1a) the primer coating film obtained after step (1) is flashed-off before applying the basecoat composition in step (2), preferably for a period of 1 to 20 minutes, more preferably for a period of 2 to 15 minutes, in particular for a period of 5 to 10 minutes. Preferably, step (1a) is performed at a temperature not exceeding 40°C, more preferably at a temperature in the range of from 18 to 30°C.

The term "flashing off" in the sense of the present invention preferably means a drying, wherein the solvents (water and/or organic solvent(s)) are partially evaporated from the coating film, before the next coating composition is applied and/or a curing is carried out. No curing is performed by the flashing-off.

### Step (2)

In step (2) a basecoat composition is applied to an optionally pre-coated substrate or - in case step (1) is performed - to the primer coating film of the substrate obtained from step (1) and a basecoat coating film is formed adjacent to the primer coating film, wherein the inventive coating material composition is used in each case as basecoat composition.

Preferably, step (2) is performed prior to curing the primer coating film obtained after optional step (1).

Preferably, the inventive method further comprises a step (2a), which is carried out after step (2) and before optional step (3) and before step (4). In said step (2a) the basecoat coating film obtained after step (2) is flashed-off before applying any further coating composition, preferably for a period of 1 to 20 minutes, more preferably for a period of 2 to 15 minutes, in particular for a period of 5 to 10 minutes. Preferably, step (2a) is performed at a temperature not exceeding 40°C, more preferably at a temperature in the range of from 18 to 30°C.

### Optional step (3)

In optional step (3) a second basecoat composition different from the basecoat composition applied in step (2) is applied to the basecoat coating film present on the substrate obtained after step (2) prior to curing said basecoat coating film and a second basecoat coating film is formed adjacent to the basecoat coating film already present on the substrate.

Preferably, the inventive method further comprises a step (3a), which is carried out after optional step (3) and before step (4). In said step (3a) the second basecoat coating film obtained after optional step (3) is flashed-off before applying the topcoat composition in step (4), preferably for a period of 1 to 20 minutes, more preferably for a period of 2 to 15 minutes, in particular for a period of 5 to 10 minutes. Preferably, step (3a) is performed at a temperature not exceeding 40°C, more preferably at a temperature in the range of from 18 to 30°C.

### Step (4)

In step (4) a topcoat composition is applied to the basecoat coating film present on the substrate obtained after step (2) prior to curing said basecoat coating film and a topcoat coating film is formed adjacent to the basecoat coating film or - in case step (3) is performed - to the second basecoat coating film present on the substrate obtained after step (3) prior to curing said second basecoat coating film and a topcoat coating film is formed adjacent to the second basecoat coating film.

The topcoat composition used in step (4) can be solventborne (non-aqueous) or aqueous, with solventborne being preferred.

The topcoat composition may be non-pigmented, i.e. may not contain any pigments at all. The topcoat composition, however, may alternatively contain coloring and/or effect pigments, preferably coloring pigments, preferably in such amounts that do not interfere with a desired transparency of the topcoat if the topcoat represents a clearcoat, which is preferred, once cured. For example, the topcoat composition may contain up to 7.5 wt.-%, preferably up to 5.0 wt.-%, more preferably up to 2.5 wt.-%, still more preferably up to 1.5 wt.-% of at least one coloring pigment, in each case based on the total solid content of the topcoat composition. Most preferably, the topcoat composition is a clearcoat composition.

Preferably, the total solid content of the topcoat such as clearcoat composition is in the range of from 10 to 65 wt.-%, more preferably of from 15 to 60 wt.-%, even more preferably of from 20 to 50 wt.-%, in particular of from 25 to 45 wt.-%, in each case based on the total weight of the topcoat composition.

The topcoat composition preferably comprises at least one binder, more preferably at least one polymer as binder. The same binders including crosslinking agents described above in connection with constituents (A) and (B) can also be used. The topcoat composition, in particular clearcoat composition, can be a 1K- or 2K-composition. When the clearcoat or topcoat coating composition is a 2K-composition it preferably comprises at least one polymer having average two or more OH-groups and/or amino groups and/or carbamate groups, more preferably OH-groups and as at least one crosslinking agent preferably at least one polyisocyanate having free NCO-groups. When the clearcoat or topcoat coating composition is a 1K-composition it preferably comprises at least one polymer having average two or more OH-groups and/or amino groups and/or carbamate groups, more preferably OH-groups and as at least one crosslinking agent preferably at least one polyisocyanate having blocked NCO-groups and/or at least one amino resin such as a melamine resin. As melamine resin a melamine resin (B) as described hereinbefore cane be used.

Particularly preferred polymers for use as binder are selected from the group consisting of polyesters, polyurethanes, poly(meth)acrylates and mixtures thereof. These terms include both homopolymers and copolymers in each case.

Suitable polyesters are described for example in EP-A-0 994 117 and EP-A-1 273 640. Polyurethane polyols are prepared preferably by reaction of polyester polyol prepolymers with suitable di- and/or polyisocyanates and are described for example in EP-A-1 273 640. Preferably, the at least one OH-functional polymer for use as binder is at least one OH-functional (meth)acrylic copolymer and/or at least one OH-functional polyester, preferably at least one OH-functional (meth)acrylic copolymer. Preferably, the at least one OH-functional polymer has an OH number of 30 to 400 mg KOH/g, more particularly between 100 and 300 KOH/g.

Suitable polyisocyanate crosslinking agents are preferably organic constituents bearing on average two or more NCO-groups. The at least one organic constituent used as crosslinking agent preferably has a cycloaliphatic structure and/or a parent structure that is derived from a cycloaliphatic polyisocyanate by trimerization, dimerization, urethane formation, biuret formation, uretdione formation and/or allophanate formation. Alternatively or additionally, the at least one organic constituent used as crosslinker preferably has an acyclic aliphatic structure and/or a parent structure that is derived from an acyclic aliphatic polyisocyanate by trimerization, dimerization, urethane formation, biuret formation, uretdione formation and/or allophanate formation. The acyclic aliphatic polyisocyanates - optionally serving as parent structures - are preferably substituted or unsubstituted aliphatic polyisocyanates that are known per se. Examples are tetramethylene 1,4-diisocyanate, hexamethylene 1,6-diisocyanate, 2,2,4-trimethylhexane 1,6-diisocyanate, ethylene diisocyanate, dodecane 1,12-diisocyanate, and mixtures of the aforementioned polyisocyanates. The cycloaliphatic polyisocyanates - optionally serving as parent structures - are preferably substituted or unsubstituted cycloaliphatic polyisocyanates which are known per se. Examples of preferred polyisocyanates are isophorone diisocyanate, cyclobutane 1,3-diisocyanate, cyclohexane 1,3-diisocyanate, cyclohexane 1,4-diisocyanate, methylcyclohexyl diisocyanates, hexahydrotoluene 2,4-diisocyanate, hexahydrotoluene 2,6-diisocyanate, hexahydrophenylene 1,3-diisocyanate, hexahydrophenylene 1,4-diisocyanate, perhydrodiphenylmethane 2,4'-diisocyanate, 4,4'-methylendicyclohexyl diisocyanate and mixtures of the aforementioned polyisocyanates. As mentioned before, both free and blocked polyisocyanates can be used as crosslinking agent in the topcoat.

Preferably, the inventive method further comprises a step (4a), which is carried out after step (4). In said step (4a) the topcoat coating film obtained after step (4) is flashed-off before performing curing step (5), preferably for a period of 1 to 20 minutes, more preferably for a period of 2 to 15 minutes, in particular for a period of 5 to 10 minutes. Preferably, step (4a) is performed at a temperature not exceeding 40°C, more preferably at a temperature in the range of from 18 to 30°C.

### Step (5)

In step (5) at least the basecoat film and the topcoat film obtained after steps (2) and (4) and optionally also - if present - the primer coating film and/or the second basecoat film obtained after step(s) (1) and/or (3) are jointly cured to obtain a multilayer coating system.

Each resulting cured coating film represents a coating layer.

Preferably, step (5) is performed at a temperature less than 150°C, preferably less than 130°C, in particular at a temperature in the range of from 15 to 110°C or of from 15 to 90°C, for a period of 5 to 45 minutes, preferably for a period of 20 to 45 minutes, in particular for a period of 25 to 35 minutes.

### Inventive coated substrate

A further subject-matter of the present invention is a coated substrate, which is obtainable by one or both of the aforementioned inventive methods.

All preferred embodiments described hereinbefore in connection with the inventive coating material composition and the inventive methods are also preferred embodiments with regard to the aforementioned inventive coated substrate.

### Inventive use

A further subject-matter of the present invention is a use of the inventive coating material composition as a basecoat composition, preferably in one or both of inventive methods.

All preferred embodiments described hereinbefore in connection with the inventive coating material composition and the inventive methods as well as the inventive coated substrate are also preferred embodiments with regard to the aforementioned inventive use.

Preferably, the use of the inventive coating material composition as a basecoat composition, is for preventing an insufficient cure of a topcoat coating film when applied on top of a coating film obtained from applying the inventive coating material composition as a basecoat composition onto an optionally pre-coated substrate, preferably in one or both of inventive methods, and/or for ensuring a sufficient catalytic activity of the at least one acidic crosslinking catalyst (C) being present in the inventive coating material composition for catalyzing a crosslinking reaction between at least the functional groups of the melamine resin (B) and the functional groups of polymer (A).

### Methods

### 1. Determining the non-volatile fraction

The amount of solid content (non-volatile matter, solid fraction) including the total solid content is determined via DIN EN ISO 3251:2019-09 at 110°C for 60 min.

### 2. Determining molecular weight and polydispersity

To determine average polymer molecular weights (M_{w}, Mₙ and Mₚ) by gel permeation chromatography (GPC), fully dissolved polymer samples are fractionated on a porous column stationary phase. Tetrahydrofuran (THF) is used as the eluent solvent. The stationary phase is a combination of Waters Styragel HR 5, HR 4, HR 3, and HR 2 columns. Five milligrams of a sample are added to 1.5 mL of eluent solvent and filtered through a 0.5 µm filter. After filtering, 100 µl of the polymer sample solution is injected into the column at a flow rate of 1.0 ml/min. Separation takes place according to the size of the polymer coils which form in the eluent solvent. The molecular weight distribution, the number average molecular weight Mₙ, weight average molecular weight M_{w}, and molecular weight of the highest peak Mₚ of the polymer samples were calculated with the aid of a chromatography software utilizing a calibration curve generated with a polymer standard kit including a series of unbranched-polystyrene standards of varied molecular weights, which is available from Polymer Laboratories. The polydispersity index (PDI) is determined according to the formula M_{w}/Mₙ.

### 3. Determination of tackiness

The degree of tackiness can be subjective, so to control for this an objective rating scale has been created using cheesecloth as a means of measuring tackiness and assigning a rating of 0-4. A rating of "4" corresponds with the cheesecloth adhering to the coating when pulled upwards at 90 degrees to the panel and coating material being transferred to the cheesecloth. A rating of "3" corresponds with the cheesecloth adhering to the coating when pulled upwards at 90 degrees from the panel and leaving a permanent deformation in the coating. A rating of "2" corresponds with the cheesecloth adhering to the coating when pulled upwards at 90 degrees from the panel, but leaving no permanent deformation in the coating. A rating of "1" corresponds with the cheesecloth not adhering to the coating when pulled upwards at 90 degrees from the panel but adhering to the coating when pulled sideways at approximately 0 degrees from the panel. A rating of "0" corresponds with the cheesecloth not adhering to the coating under any condition.

### Examples

The following examples further illustrate the invention but are not to be construed as limiting its scope. 'Pbw' means parts by weight. If not defined otherwise, 'parts' means 'parts by weight'.

### 1. Copolymer preparation

A diblock copolymer was synthesized by ATRP as described hereinafter in three steps A, B and C. Step B in turn comprised two stages B1 and B2. The raw material/reagents used in each of the steps is indicated in Table 1. In the first step A, glycidyl methacrylate (GMA) was polymerized to polyglycidyl methacrylate (polyGMA) with active chain-end as the first block. This was followed by super advanced ATRP of a mixture of butyl methacrylate (BMA), butyl acrylate (BA) and 2-hydroxypropyl methacrylate (HPMA). The temperature profile was monitored via KEM-NET Controller. The monomer conversion was measured by NMR and gas Chromatography.

Step A: A 3 L four neck round bottom flask fitted with a nitrogen line, a condenser, an agitator, a heating mantle and a thermocouple was charged with reagents 1-2 (Table 1). In a 20 mL sintered vial, reagents 3-5 (Table 1) were mixed and stirred to make a bluish green homogeneous catalyst solution and the solution was added to the reaction flask. The solution was heated to 80°C under nitrogen blanket. When the temperature reached 80°C, the mixture 6-7 (Table 1) was added to the flask at once. When temperature increased to 80°C again, the monomer (GMA) (reagent 8; Table 1) was fed to the reaction flask using a monomer pump. The feeding was done at 80°C for a total of 2.5 hours, then the temperature was held at 80°C for another 1 hour. The monomer addition rate was about 0.67 wt.-%/min. The conversion measured by NMR was >90% with a poly dispersity index (PDI) of 1.30.

Step B: The solvent (n-butyl acetate) (entry 9; Table 1) was added at once. Temperature dropped slightly. When the temperature reached 80°C again, the mixture of 10 and 11 (Table 1) was added to the flask at once. The temperature dropped slightly, and it was allowed to reach to 80°C. At this point, the monomer mixture of 12-14 (Table 1) was fed at a constant rate through monomer pump. The feeding was completed in 3 hours and then the reaction was held at 80°C for 1 hour. Subsequently the temperature was increased gradually to 90°C and held for another 1 hour. The monomer addition rate was about 0.55 wt.-%/min. Then kicker (15-16) was added and hold at 90°C for 1.5 h. The monomer conversion reached >99% and was analyzed via NMR. The PDI was 1.33.

Step C: Reagents/material 17-19 were added to the reaction flask and the mixture was heated at 115°C for about 2.5 h until the weight per epoxy reached >7000 g/mol indicating that >95 mol.% of all epoxide groups have undergone reaction. The PDI of the copolymer obtained was 1.49. The obtained product has a solid content of 54 wt.-% and an OH number of 220 mg KOH/g, with respect to its solid content, and is used as such (DBC1).

**Table 1: Preparation of diblock copolymer**

| **Step** | **Soln.** | **Parts** | **Material/ reagent #** | **Material/ reagent** | **Wt.-%** | **Amount [g]** |
|---|---|---|---|---|---|---|
| A | Reactor solution for block 1 | Part A | 1 | n-butyl acetate | 11.55 | 221.00 |
| | | | 2 | toluene sulfonyl chloride | 2.09 | 39.91 |
| | | Part B | 3 | tris(2-pyridylmethyl)amine (T2PA) | 0.02 | 0.46 |
| | | | 4 | CuCl₂ | 0.0075 | 0.14 |
| | | | 5 | ethanol | 0.13 | 2.50 |
| | | Part C | 6 | AMBN (VAZO-67) | 0.22 | 4.30 |
| | | | 7 | n-butyl acetate | 0.89 | 17.00 |
| | Feeding solution for block 1 | Part D | 8 | glycidyl methacrylate (GMA) | 8.60 | 164.48 |
| B (B1) | Solution for block 2 | Part E | 9 | n-butyl acetate | 5.23 | 100.00 |
| | | Part F | 10 | AMBN (VAZO-67) | 0.24 | 4.69 |
| | | | 11 | n-butyl acetate | 3.25 | 62.19 |
| | Feeding solution for block 2 | Part G | 12 | n-butyl methacrylate | 8.90 | 170.34 |
| | | | 13 | HPMA | 12.40 | 237.14 |
| | | | 14 | n-butyl acrylate | 15.73 | 300.93 |
| B (B2) | Kicker | Part H | 15 | AMBN (VAZO-67) | 0.05 | 1.00 |
| | | | 16 | n-butyl acetate | 1.06 | 20.00 |
| C | Epoxy-acid | | | | | |
| | | Part I | 17 | 3,5 dihydroxy | 6.75 | 129.04 |
| | conversion | | | benzoic acid | | |
| | | | 18 | n-butyl acetate | 22.22 | 425.00 |
| | | | 19 | acetic acid | 0.67 | 12.80 |

AMBN is 2,2'-Azobis(2-methylbutyronitrile). Monomer conversions at various time intervals were measured by taking out aliquots using a needle and syringe at the given time followed by dissolving it in chloroform (CDCl₃) and analyzing it by ¹H NMR spectroscopy in a Bruker Ultrashield 300 MHz NMR instrument. Reaction times vs. temperature profiles for the synthesis of the copolymer were recorded using a temperature controller from J-KEM Scientific Model 210 using KEM-NET software. A temperature probe was inserted inside the solution which was connected to the controller. The controller was further connected to a computer equipped with KEM-NET software. The set temperature (desired temperature of the reaction) and observed temperature were recorded into KEM-NET software which was further plotted using Excel software.

### 2. Preparation of pigment pastes

### Preparation of pigment pastes P1 to P5

The pigment pastes P1A to P5A and P1B to P5B are indicated in Tables 2a and 2b and were prepared from the constituents and their amounts as listed in Tables 2a and 2b. All amounts are in percent by weight (wt.-%) based on the total weight of the respective pigment paste. Pigment pastes P1A, P2A, P3A, P4A and P5A are inventively used pastes, whereas P1B, P2B, P3B, P4B and P5B are comparatively used pastes.

The hydroxyl-functional acrylic resin is described in example 17 of Patent US 4,546,046 and has a solid content of 75 wt.-%. Solsperse 32600 is a commercially available amino-group containing dispersant resin commercially available from Lubrizol. Solsperse 5000 is a commercially available pigment synergist commercially available from Lubrizol. Monarch 1300, Monarch 900, Monolite Blue 3R-H, Paliogen Red L3875 and Cinilex DPP Red SR1C are commercially available pigments.

**Table 2a: Preparation of pigment pastes P1 to P3**

| **Material** | **Pastes P1** | | **Pastes P2** | | **Pastes P3** | |
|---|---|---|---|---|---|---|
| | **Paste P1A** | **Paste P1B** | **Paste P2A** | **Paste P2B** | **Paste P3A** | **Paste P3B** |
| Hydroxyl-functional acrylic resin | 8.23 | 8.23 | 10.16 | 10.16 | 9.47 | 9.47 |
| n-pentyl propionate | 2.78 | 2.78 | 5.58 | 5.58 | 7.42 | 7.42 |
| Copolymer DBC1 | 31.57 | - | 12.66 | - | 6.01 | - |
| Solsperse 32600 | - | 42.77 | - | 17.15 | - | 8.14 |
| Solsperse 5000 | 4.19 | 4.19 | 1.91 | 1.91 | 0.41 | 0.41 |
| Monarch 1300 | 17.00 | 17.00 | - | - | - | - |
| Monarch 900 | - | - | 15.00 | 15.00 | - | - |
| Monolite Blue 3R-H | - | - | - | - | 15.00 | 15.00 |
| Aromatic 100 | 36.23 | 25.03 | 54.69 | 50.20 | 61.69 | 59.56 |
| | | | | | | |
| **Pigment/ dispersant ratio** | 0.97 | 0.99 | 2.13 | 2.18 | 4.48 | 4.60 |

**Table 2b: Preparation of pigment pastes P4 and P5**

| **Material** | **Pastes P4** | | **Pastes P5** | |
|---|---|---|---|---|
| | **Paste P4A** | **Paste P4B** | **Paste P5A** | **Paste P5B** |
| Hydroxyl-functional acrylic resin | 8.71 | 8.71 | 5.93 | 5.93 |
| n-pentyl propionate | 4.40 | 4.40 | - | - |
| Copolymer DBC1 | 15.48 | - | 4.02 | - |
| Solsperse 32600 | - | 20.96 | - | 5.44 |
| Solsperse 5000 | - | - | 0.23 | 0.23 |
| Paliogen Red L3875 | 31.58 | 31.58 | - | - |
| Cinilex DPP Red SR1C | - | - | 40.00 | 40.00 |
| Aromatic 100 | 39.83 | 34.36 | 49.82 | 48.40 |
| | | | | |
| **Pigment/ dispersant ratio** | 3.66 | 3.77 | 17.87 | 18.38 |

The pigment/dispersant ratio is the weight ratio of pigment to copolymer DBC1 or to Solsperse 32600 in the paste.

### 3. Preparation of high-solids basecoats

Two solventborne basecoat compositions 6A and 6B have been prepared by making use of one of the pigment pastes P1A and P1B. The constituents listed in Table 3 have been mixed under stirring in a dissolver in the sequence given in said Table to prepare these basecoat compositions. Composition 6A is an inventive basecoat composition, whereas composition 6B is comparative. All amounts are in percent by weight based on the total weight of the respective coating composition. Both 6A and 6B each have a solid content of 55 wt.-%.

The hydroxyl-functional acrylic resin used has already been described above in the context of the preparation of the pigment pastes. Rheology control resin is described in Patent US 4,290,932, Example 27 Part (A), which is then transferred into the solvent phase as described in Example 27 Part (B) of US 4,290,932, and is subjected to the addition of hydroxyl-functional acrylic resin. Hyperbranched polyol resin is described in Example 3 of Patent US 9,938,429 B2, starting in column 20, line 60 and ending column 21 line 22. Resimene 755 is a melamine formaldehyde resin commercially available from Prefere Resins. Resimene 764 is a melamine formaldehyde resin commercially available from Prefere Resins. Acrylic flow control resin Lindron 22 is commercially available from Lindau Chemicals. UV Absorber Tinuvin 384-2 is commercially available from BASF. Fumed Silica Dispersion is a dispersion of Aerosil R 972, commercially available from Evonik, in the above described hydroxyl-functional acrylic resin and an organic solvent. Barium sulfate dispersion 1 is a dispersion of Blanc Fixe Micro, commercially available from Solvay, in the above described hydroxyl-functional acrylic resin and an organic solvent. Barium sulfate dispersion 2 is a dispersion of Sachtosperse HU-N, commercially available from Prakash Chemicals, in the above described hydroxyl-functional acrylic resin and an organic solvent. CAB Solution is a solution of CAB 551-0.2, commercially available from Eastman, in organic solvent. Phosphate ester resin is the reaction product of diglycidylbisphenol-A with phosphoric acid, wherein the reaction consumes virtually all epoxide functionality and results in an acid number of 29-32 mg KOH/g. Acid catalyst is dodecylbenzenesulfonic acid blocked with diisopropanol amine. Mica Slurry is a slurry of Pyrisma T81-23 SW Liquid Blue, commercially available from Merck, in the above described hydroxyl-functional acrylic resin and an organic solvent.

**Table 3: Preparation of basecoat compositions 6A and 6B**

| **Material** | **Coating Composition 6A (inventive)** | **Coating Composition 6B (non-inventive)** |
|---|---|---|
| Rheology control resin | 23.38 | 23.38 |
| Aminomethyl propanol | 0.27 | 0.27 |
| N-Methyl pyrrolidone | 0.76 | 0.76 |
| n-butyl acetate | 1.69 | 1.69 |
| n-pentyl propionate | 2.97 | 2.97 |
| Hyperbranched polyol resin | 7.93 | 7.93 |
| Resimene 755 | 6.98 | 6.98 |
| Resimene 764 | 5.70 | 5.70 |
| Acrylic flow control resin Lindron 22 | 0.04 | 0.04 |
| UV Absorber Tinuvin 384-2 | 0.63 | 0.63 |
| Fumed silica dispersion | 4.21 | 4.21 |
| barium sulfate dispersion 1 | 6.49 | 6.49 |
| barium sulfate dispersion 2 | 5.32 | 5.32 |
| Pigment paste P1A | 9.71 | - |
| Pigment paste P1B | - | 9.71 |
| Pigment paste P2B | 1.93 | 1.93 |
| Hydroxyl-functional acrylic resin | 13.40 | 13.40 |
| CAB Solution | 3.17 | 3.17 |
| Phosphate ester resin | 1.15 | 1.15 |
| Acid catalyst | 2.18 | 2.18 |
| Mica slurry | 0.46 | 0.46 |
| n-pentyl propionate | 1.62 | 1.62 |

### 4. Preparation of multilayer coating systems

A PVC sealer (a commercially available PS2812 sealer from EFTEC) was applied to a steel panel (25 cm x 25 cm) bearing a cured electrodeposition coat in that the sealer was drawn down in five strips on the coated panel, such that each strip has a thickness of about 3 mm after curing. The sealer was then baked for 4 minutes at 135°C. Afterwards, basecoat composition 6A was applied to one plate and basecoat composition 6B was applied to another plate. Each basecoat was spray-applied as a wedge of increasing film thickness from the top of the panel to the bottom of the panel (from 10 to 25 µm dry film thickness). Then, a commercial high solids Uregloss^{®} clearcoat (R10CG392D; from BASF Corp. USA) was spray-applied wet-on-wet as a wedge of increasing film thickness from the left side of the panel to the right side of the panel in each case (from 10 to 30 µm dry film thickness). This allows for the comparative evaluation of tackiness over the sealer at numerous film thicknesses within the range of film thicknesses applied. The basecoat and clearcoat are baked in each case simultaneously for 10 minutes at 135°C. The baking takes place within a box inside the oven used that restricts air flow to the panel.

### 5. Properties of the substrates coated with the multilayer coating systems

The tackiness of the coatings of the multilayer coating systems obtained has been investigated according to the method described hereinbefore in the 'Methods' section. The results are summarized in Tables 4a to 4e.

**Table 4a: Evaluation of tackiness, I**

| Basecoat film thickness [µm] | 10 | 15 | 20 | 25 |
|---|---|---|---|---|
| Clearcoat film thickness [µm] | 10 | 10 | 10 | 10 |
| Tackiness rating for system comprising basecoat layer obtained from composition 6A (inventive) | 0 | 0 | 0 | 0 |
| Tackiness rating for system comprising basecoat layer obtained from composition 6B (comparative) | 3 | 3 | 3 | 3 |

**Table 4b: Evaluation of tackiness, II**

| Basecoat film thickness [µm] | 10 | 15 | 20 | 25 |
|---|---|---|---|---|
| Clearcoat film thickness [µm] | 15 | 15 | 15 | 15 |
| Tackiness rating for system comprising basecoat layer obtained from composition 6A (inventive) | 0 | 0 | 0 | 0 |
| Tackiness rating for system comprising basecoat layer obtained from composition 6B (comparative) | 3 | 3 | 3 | 3 |

**Table 4c: Evaluation of tackiness, III**

| Basecoat film thickness [µm] | 10 | 15 | 20 | 25 |
|---|---|---|---|---|
| Clearcoat film thickness [µm] | 20 | 20 | 20 | 20 |
| Tackiness rating for system comprising basecoat layer obtained from composition 6A (inventive) | 0 | 0 | 0 | 0 |
| Tackiness rating for system comprising basecoat layer obtained from composition 6B (comparative) | 3 | 4 | 4 | 4 |

**Table 4d: Evaluation of tackiness, IV**

| Basecoat film thickness [µm] | 10 | 15 | 20 | 25 |
|---|---|---|---|---|
| Clearcoat film thickness [µm] | 25 | 25 | 25 | 25 |
| Tackiness rating for system comprising basecoat layer obtained from composition 6A (inventive) | 0 | 0 | 0 | 0 |
| Tackiness rating for system comprising basecoat layer obtained from composition 6B (comparative) | 3 | 3 | 3 | 3 |

**Table 4e: Evaluation of tackiness, V**

| Basecoat film thickness [µm] | 10 | 15 | 20 | 25 |
|---|---|---|---|---|
| Clearcoat film thickness [µm] | 30 | 30 | 30 | 30 |
| Tackiness rating for system comprising basecoat layer obtained from composition 6A (inventive) | 0 | 0 | 0 | 0 |
| Tackiness rating for system comprising basecoat layer obtained from composition 6B (comparative) | 2 | 2 | 2 | 2 |

As it is evident the use of inventive coating composition 6A using the inventively used copolymer showed significantly improved performance with respect to tackiness evaluation compared to using the comparative coating composition 6B comprising a conventional amino-group containing dispersant. In particular, it has been demonstrated that in case of comparative example 6B both the migration of basic materials from the PVC sealer into the basecoat and clearcoat layers and the presence of basic materials in the basecoat and clearcoat themselves, such as the amino-group containing dispersants present in the basecoat leads to an undesired tackiness, which is the result of interference with the acid catalyst both by migrated substances and the basic amino-group containing dispersant present in example 6B. Surprisingly, a significantly improved performance with respect to tackiness has been observed in case of inventive example 6A: the inventive coating composition effectively lowers the total amount of basic materials during the curing process. The basic material from the PVC sealer is still present, but the lower total quantity of basic material surprisingly improves the cure response of the coating material composition.

## Claims

1. A coating material composition comprising at least constituents (A), (B), (C), (D), (E) and (F), each being different from one another, namely
(A) at least one film-forming polymer having crosslinkable functional groups,
(B) at least one melamine resin as crosslinking agent having crosslinkable functional groups, which can be crosslinked with the crosslinkable functional groups of polymer (A),
(C) at least one acidic crosslinking catalyst, which is suitable to catalyze a crosslinking reaction between at least the functional groups of the melamine resin (B) and the functional groups of polymer (A),
(D) water and/or at least one organic solvent,
(E) at least one pigment, and
(F) at least one OH-functional (meth)acrylic block copolymer, wherein the copolymer contains side chains at least within a part of its structural units forming at least one of the blocks, each side chain containing at least one aromatic moiety and each side chain being attached via an ester and/or ether bond,
wherein the coating material composition has a total solids content of at least 35 wt.-%, based on the total weight of the coating material composition.

2. The coating material composition according to claim 1, **characterized in that** copolymer (F) is a diblock copolymer, preferably a linear diblock copolymer.

3. The coating material composition according to claim 1 or 2, **characterized in that**
at least a first block of copolymer (F) is prepared by polymerization of least one epoxide-group containing monomer, preferably of glycidyl (meth)acrylate, and optionally further monomers, and
at least a second block different from the first block is prepared by polymerization of at least one alkyl (meth)acrylate, preferably at least one hydroxyalkyl (meth)acrylate, and optionally further monomers,
followed by reaction of at least part of the epoxide groups of the first block of the formed copolymer with at least one aromatic component bearing at least one, preferably precisely one, carboxylic acid group, and optionally bearing one or more OH-groups, preferably at least two OH-groups.

4. The coating material composition according to any of the preceding claims, **characterized in that** the pigment (E) to copolymer (F) weight ratio in the coating material composition is in the range of from 0.25 to 20.0, preferably in the range of from 0.45 to 19.0, more preferably of from 0.55 to 15.0, in particular of from 0.65 to 10.

5. The coating material composition according to any of the preceding claims, **characterized in that** copolymer (F) has a polydispersity in the range of from >1.0 to ≤ 10.0, preferably of from 1.1 to 10.0, more preferably of from 1.2 to 5.0, even more preferably of from >1.2 to 2.5.

6. The coating material composition according to any of the preceding claims, **characterized in that** copolymer (F) is present in the coating material composition in an amount in the range of from 0.20 to 12.0 wt.-%, preferably of from 0.30 to 10.0 wt.-%, in particular of from 0.50 to 8.5 wt.-%, in each case based on the total solids content of the coating material composition.

7. The coating material composition according to any of the preceding claims, **characterized in that** melamine resin (B) is a melamine aldehyde resin, preferably a melamine formaldehyde resin, more preferably a monomeric melamine formaldehyde resin, even more preferably a hexamethoxyalkyl melamine formaldehyde resin, in particular a hexamethoxyalkyl melamine formaldehyde resin selected from the group consisting of hexamethoxymethyl melamine formaldehyde resins, hexamethoxybutyl melamine formaldehyde resins, hexamethoxy(methyl and/or butyl) melamine formaldehyde resins, and mixtures thereof.

8. The coating material composition according to any of the preceding claims, **characterized in that** melamine resin (B) is a melamine aldehyde resin bearing alkylol groups, preferably methylol and/or butylol groups, as crosslinkable functional groups, preferably in an amount of at least 90%, based on the total number of reactive sites present in the melamine prior to reaction with the aldehyde, and preferably has a content of imino groups of equal to or less than 10%, based on the total number of reactive sites present in the melamine prior to reaction with the aldehyde.

9. The coating material composition according to any of the preceding claims, **characterized in that** at least one organic phosphorus-containing and/or sulfur-containing acidic catalyst is used as crosslinking catalyst (C), optionally blocked with at least one amine, preferably blocked with at least one organic amino compound.

10. The coating material composition according to any of the preceding claims, **characterized in that** it has a total solids content of at least 37.5 wt.-%, preferably of at least 40.0 wt.-%, more preferably of at least 42.5 wt.-%, even more preferably of at least 45.0 wt.-%, in particular of at least 47.5 wt.-%, in each case based on the total weight of the coating material composition.

11. A method of forming a coating film at least partially onto at least one surface of a substrate, wherein said method comprises at least one method step of applying the coating material composition according to any one claims 1 to 10 at least partially onto at least one surface of an optionally pre-coated substrate to form a coating film on the surface of the substrate.

12. A method of preparing a multilayer coating system onto an optionally pre-coated substrate comprising at least steps (2), (4) and (5), and optionally step(s) (1) and/or (3), namely
(1) optionally applying a primer composition to an optionally pre-coated substrate and forming an primer coating film on the optionally pre-coated substrate,
(2) applying a basecoat composition to an optionally pre-coated substrate or - in case step (1) is performed - to the primer coating film of the substrate obtained from step (1) and forming a basecoat coating film adjacent to the primer coating film,
(3) optionally applying a second basecoat composition different from the basecoat composition applied in step (2) to the basecoat coating film present on the substrate obtained after step (2) prior to curing said basecoat coating film and forming a second basecoat coating film adjacent to the basecoat coating film already present on the substrate,
(4) applying a topcoat composition to the basecoat coating film present on the substrate obtained after step (2) prior to curing said basecoat coating film and forming a topcoat coating film adjacent to the basecoat coating film or - in case step (3) is performed - to the second basecoat coating film present on the substrate obtained after step (3) prior to curing said second basecoat coating film and forming a topcoat coating film adjacent to the second basecoat coating film, and
(5) jointly curing at least the basecoat film and the topcoat film obtained after steps (2) and (4) and optionally also - if present - the primer coating film and/or the second basecoat film obtained after step(s) (1) and/or (3) to obtain a multilayer coating system,
wherein the coating material composition according to any one of claims 1 to 10 is used as basecoat composition in step (2) when step (3) is not performed, or is used as basecoat composition in step (2) or as second basecoat composition in step (3) when step (3) is performed.

13. The method according to claim 12, **characterized in that** the optionally pre-coated substrate used in step (2) or in optional step (1) is a substrate at least bearing a cured sealer coating layer and optionally also a cured electrodeposition coating layer underneath the sealer layer.

14. A coated substrate obtainable by the inventive method according to any one of claims 11 to 13.

15. A use of the coating material composition according to any of claims 1 to 10 as a basecoat composition, preferably in the method according to any one of claims 11 to 13.
